# EUROPEAN PATENT SPECIFICATION

(11) **EP 0 659 325 B1**
(45) Date of publication and mention of the grant of the patent: **05.12.2001**
(21) Application number: 93922663.5
(22) Date of filing: 08.09.1993
(51) Int. Cl.: H04M 1/72, H04B 7/26

(54) **CORDLESS TELEPHONE SYSTEM WITH DIFFERENT RINGING PATTERNS**
SCHNURLOSES TELEFONSYSTEM MIT UNTERSCHIEDLICHEN RUFKENNMUSTERN
SYSTEME D'APPAREIL TELEPHONIQUE SANS FIL A SONNERIES DIFFERENTES

(30) Priority: 10.09.1992 NL 9201577
(43) Date of publication of application: 28.06.1995
(73) Proprietor: TELEFONAKTIEBOLAGET LM ERICSSON, 126 25 Stockholm (SE)
(72) Inventor: VAN OS, Lucius, Cornelis, Jozef, Maria, NL-7623 GA Borne (NL)
(74) Representative: Dohmen, Johannes Maria Gerardus
(86) International application number: NL9300183
(87) International publication number: WO9406254

(56) References cited:
- EP-A- 0 265 064
- EP-A- 0 280 323
- EP-A- 0 319 210
- DE-C- 2 031 478
- IEEE PROCEEDINGS vol. 132, no. 5 , August 1985 , STEVENAGE , HERTS , (GB) pages 425 - 432 WHITE ET AL '900 MHZ DIGITAL CORDLESS TELEPHONE'
- PATENT ABSTRACTS OF JAPAN vol. 16, no. 233 (E-1209)28 May 1992 & JP,A,40 045 639 (NEC CORP.)

## Description

The invention relates to a telephone system comprising:
a telephone exchange with a central unit which is adapted for processing at least speech signals and call signals;
a number of cordless handsets;
at least one transmitter/receiver for communication between the exchange and the handsets; and
a speech buffer present in each handset.

Such a telephone system is known. Known telephone systems of this type are based on internationally established norms such as CT3 and DECT. The nature of such systems is such that when an attempt is made to realize a connection there is no absolute guarantee that the connection can be made. The system architecture can further be such that more portable handsets are incorporated in the system than there are connecting channels in the system. This limitation of possibilities affects the communication speed in respect of signalling messages or calls between the fixed part and the portable part of the cordless line. As the maximum capacity of the system is approached, this communication speed will decrease.

Since the command signal for alerting the portable handset with respect to an incoming call is transferred over this fixed signalling path, it will be apparent that it is not possible to use this path for transferring bell-on and bell-off signals to a handset which could be used to follow a specific ringing pattern generated by the telephone exchange to which the handset is linked. Making use of this path would result in a varying cadence depending on the specific operational state of the system.

The invention has for its object to resolve the said problem. To this end the invention provides the insight that the call command must be transmitted to the portable handset via the path with a fixed delay. In this respect the telephone system according to the invention has the feature that the central unit is adapted for generating a call signal, the content of which depends on the nature of the connection to be made, which call signal is added to the speech signal;
a handset is adapted for storing in the speech buffer and reading therefrom the content of that call signal; and
acoustic and/or optical warning means are energized subject to that content.

The fixed part of the cordless line determines whether the bell must be on or off by monitoring the analog line connection from the telephone exchange. This information is entered as command into the speech buffer of the portable handset. This is possible since these buffers are not used during the constructing of the connection.

It will be apparent that with this system design according to the invention the ringing pattern is wholly independent of the specific ringing patterns which are established in for instance the telephone systems of different countries. The ringing pattern depends on the nature of the connection to be made. The user obtains information as to whether for instance an internal call, an external call or a request to call back etc. is being made. For this purpose the system is provided with memory means in which the diverse specific ringing patterns are stored and these are read out subject to the nature of the content of the call signal.

The invention will now be elucidated with reference to the annexed drawings, in which:
figure 1 is a schematic depiction of a part of a signal format;
figure 2 shows a highly simplified block diagram of the system according to the invention; and
figure 3 shows a data-flow diagram of a telephone according to the invention.

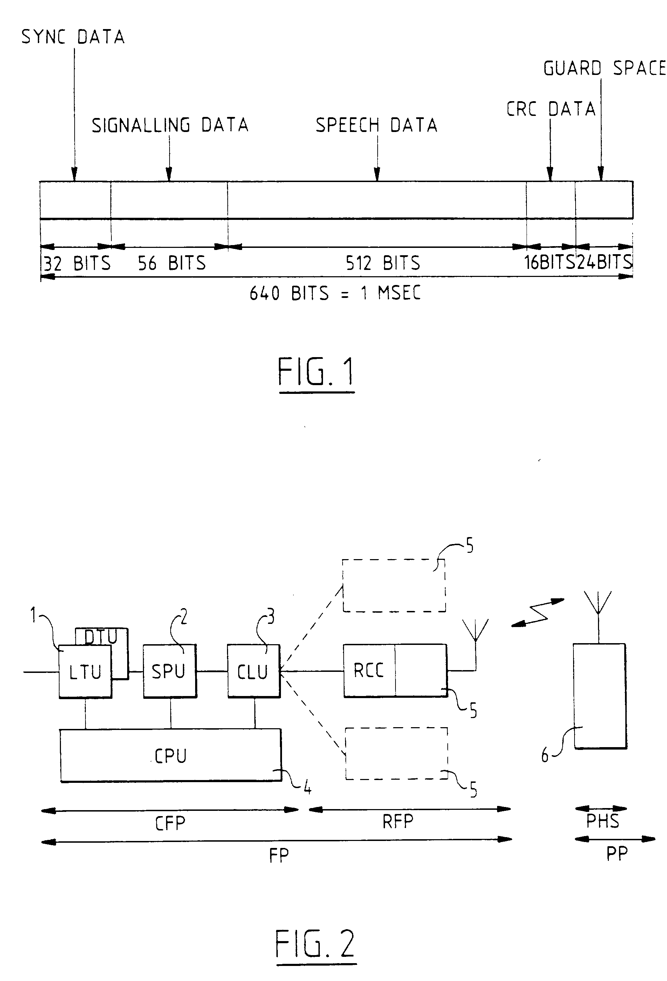

Figure 1 shows a part of the signal as this is generally exchanged between the telephones and the transmitters/receivers. The relevant signal format is designated "slot format".

The two most important areas are formed by "speech data" and "signalling data".

The speech data is used only during a conversation for sending back and forth digitalized speech signals.

The signalling data are both during a conversation and during the beginning and end of a conversation. During a conversation communication takes place here between the Central Processing Unit (CPU) in the system and the portable telephone to maintain the conversation, for instance transfer of the conversation from the one transmitter/receiver to another, depending on propagation conditions and the like. During the initial phase this area is used by the CPU to inform the telephone that a call is waiting, in which case a ring call must take place, or by the telephone to inform the CPU that a call is desired.

After ending of the call this area is used to break the connection on both sides in controlled manner. The above stated aspect of "fixed delay" is now associated with the system architecture. Inside the system there is a path from the telephone line to the portable telephone which always has a fixed length in time for the speech data. This is effected by allocating one such path through the system for each connection. This is in contrast to the paths taken by the signalling data. These paths all lead to one and the same CPU which must control all telephones in respect of the signalling data.

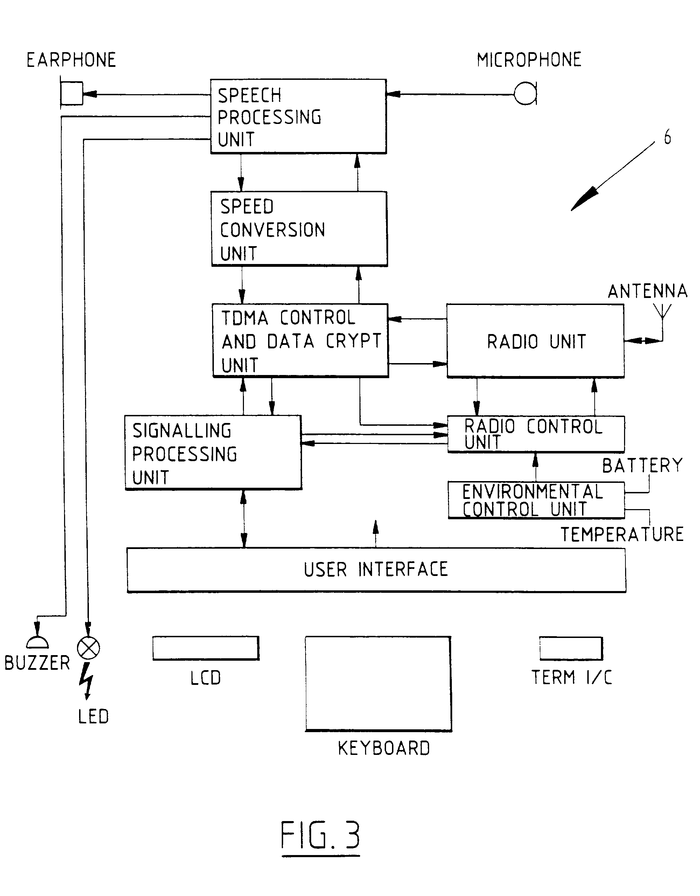

Figure 2 shows a (hardware) block diagram of the system according to the invention.

The LTU 1 (Line Termination Unit), which has a connection to the telephone exchange for each telephone extension, has the following tasks:
* Analog/digital conversion of speech originating from the telephone exchange to the telephone and vice versa
* Generating of signals relating to receiver on the hook/off the hook;
* Ringing detection and conversion to bell-on and bell-off commands which are then injected into the speech path. Following the speech path from and to the telephone 6 further, we encounter the SPU (Speech Processing Unit) 2. This has the following tasks:

* Amplification adjustment
* Speech compression/decompression
* Echo suppression
* Routing of bell-on/bell-off commands to the CLU (Cell Link Unit) 3.

The CLU (Cell Link Unit) 3 following on from the SPU 2 has tasks relating to both signalling and speech:
* Routing of speech (therefore also the bell-on/ bell-off commands) from the SPU 2 to the correct transmitter/receiver 5 and vice versa. In this context "correct" means routing to that transmitter/receiver RCC 5 in whose range the telephone 6 is located.
* Routing of the signalling data from the CPU 4 (which is connected for information exchange to the LTU 1, the SPU 2 and the CLU 3) to the correct transmitter/ receiver RCC 5 and vice versa.

The CLU 3 essentially brings together two data flows in the slot format and transmits the relevant signal to the portable telephone 6, wherein use is made of the most suitable connection which determines the choice of the transmitter/receiver 5.

The RCC (Remote Cell Controller) 5 must be seen as an intelligent transmitter/receiver, the most important task of which are sending and receiving the above described signals in the given format and routing thereof from and to the CLU.

The above description relates to the fixedly arranged part of the system, also known as Radio Exchange or Fixed Part (FP). This fixed part is generally disposed close to the telephone exchange. The telephones consist by and large of a radio, a so-called burst controller, a speech controller and a CPU. The radio requires no explanation. The burst controller is essentially the counterpart in the system of the CLU 3 of figure 2. It is responsible for distribution of the slot format into speech data which is sent to the speech controller and signalling data which is sent to the CPU in the telephone. The speech controller is then responsible for converting the digitalized speech into audible speech and vice versa, while by way of the signalling data the CPU has a communication channel with the CPU in the system and is also responsible for ring generation, keyboard interpretation and so on.

In the telephone the CPU must also have access to the speech data because there it can find the bell-on/ bell-off commands which it must translate into a ring signal with given information which is recognized by the user in relation to the specific nature of a connection to be made.

Figure 3 shows a data flow diagram of a telephone 2 according to the invention.

Attention is drawn to the fact that the signalling is not limited to a bell or other acoustic signalling. Visual signalling also falls within the scope of the invention.

## Claims

1. Telephone system comprising:
a telephone exchange with a central unit (4) which is adapted for processing at least speech signals and call signals;
a number of cordless handsets (6);
at least one transmitter/receiver (5) for communication between the exchange and the handsets; and
a speech buffer present in each handset,
**characterized in that**
the central unit is adapted for generating a call signal, the content of which depends on the nature of the connection to be made, which call signal is added to the speech signal;
a handset is adapted for storing in the speech buffer and reading therefrom the content of that call signal; and
acoustic and/or optical warning means are energized subject to that content.

## Patentansprüche

1. Telefonsystem, umfassend:
eine Telefonvermittlung mit einer Zentraleinheit (4), die angeordnet ist zum Verarbeiten von zumindest Sprachsignalen und Rufsignalen;
eine Anzahl von schnurlosen Handgeräten (6) ;
mindestens einen Transmitter/Empfänger (5) für eine Kommunikation zwischen der Vermittlung und den Handgeräten; und
einen Sprachpuffer, der in jedem Handgerät vorhanden ist,
**dadurch gekennzeichnet, dass**
die Zentraleinheit dazu angeordnet ist, ein Rufsignal zu erzeugen, dessen Inhalt von der aufzubauenden Verbindung abhängt, wobei das Rufsignal dem Sprachsignal hinzugefügt wird;
ein Handgerät dazu angeordnet ist, in dem Sprachpuffer den Inhalt des Rufsignals zu speichern und von dort auszulesen; und
eine akustische und/oder optische Warneinrichtung gemäss diesem Inhalt angesteuert wird.

## Revendications

1. Système téléphonique comprenant :
un commutateur téléphonique avec une unité centrale (4) qui est adaptée pour traiter au moins des signaux de parole et des signaux d'appel;
un certain nombre de combinés sans fil (6) ;
au moins un émetteur/récepteur (5) pour la communication entre le commutateur et les combinés; et
un tampon de parole présent dans chaque combiné,
**caractérisé en ce que**
l'unité centrale est adaptée pour générer un signal d'appel dont le contenu dépend de la nature de la connexion à établir, ce signal d'appel étant ajouté au signal de parole;
un combiné est adapté pour stocker dans le tampon de parole et lire à partir de celui-ci le contenu de ce signal d'appel; et
des moyens d'avertissement acoustiques et/ou optiques sont activés conformément à ce contenu.
